(19) Europäisches Patentamt / European Patent Office / Office européen des brevets

(11) **EP 4 621 708 A1**

(12) **EUROPEAN PATENT APPLICATION**

(43) Date of publication:
**24.09.2025 Bulletin 2025/39**

(21) Application number: **25159103.8**

(22) Date of filing: **20.02.2025**

(51) International Patent Classification (IPC):
**G06T 5/50** $^{(2006.01)}$      **G06T 5/94** $^{(2024.01)}$

(52) Cooperative Patent Classification (CPC):
**H04N 23/73; G06T 5/50; G06T 5/94; H04N 23/741;**
G06T 2207/10144; G06T 2207/20208;
G06T 2207/20221

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.03.2024 US 202418611145**

(71) Applicant: **INTEL Corporation
Santa Clara, CA 95054 (US)**

(72) Inventor: **ELRON, Noam
TA 6813657 ISR Tel Aviv (IL)**

(74) Representative: **HGF
HGF Limited
1 City Walk
Leeds LS11 9DX (GB)**

(54) **SELF-CALIBRATING MERGE IN MULTI-EXPOSURE HIGH DYNAMIC RANGE IMAGING**

(57)      A high dynamic range video frame can be generated from images captured using different exposure times. The merging of images may use a parameter, exposure time ratio, to combine pixel values of images to form a merged video frame. The quality of the merged video frame can depend on accuracy of the exposure time ratio. In some scenarios, the exposure time ratio is unknown or the reported information about the exposure time ratio from an auto-exposure controller is inaccurate. Using an inaccurate exposure time ratio to merge images would result in undesirable artifacts in the merged video frame. To address this issue, a self-calibrating technique may be implemented to derive the exposure time ratio based on the images themselves.

1100

RECEIVE A FIRST PIXEL PAIR 1102

ASSIGN A FIRST WEIGHT TO THE FIRST PIXEL PAIR 1104

UPDATE ACCUMULATOR VALUE(S) 1106

DETERMINE PARAMETER FOR MERGING IMAGES BASED ON ACCUMULATOR VALUE(S) 1108

MERGE IMAGES USING THE PARAMETER TO GENERATE A FIRST MERGED VIDEO FRAME OF A VIDEO 1110

FIG. 11

**Description**

Background

Imaging devices and image post-processing technologies produce images and videos with high visual quality. Imaging devices have electronic devices which can capture images of a scene at high resolution and at a high speed (e.g., frames per second). The imaging devices can be controlled to capture images with different settings such as exposure time, shutter speed, light sensitivity, frames per second, and aperture. Image post-processing technologies can include noise reduction or removal, sharpening, smoothing, upsampling, enhancement, downsampling, color tone adjustments, white balance adjustments, merging images captured using multiple exposure times, stitching images having different fields of view of the scene, etc.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

Figure (FIG.) 1 illustrates a system for generating high dynamic range video frames of a video, according to some embodiments of the disclosure.
FIG. 2 illustrates an exemplary cause for artifacts in the high dynamic range video frames, according to some embodiments of the disclosure.
FIG. 3 illustrates a merged video frame having artifacts, according to some embodiments of the disclosure.
FIG. 4 illustrates an image captured using a long exposure time and an image captured using a short exposure time, according to some embodiments of the disclosure.
FIG. 5 illustrates a plot of pixel values from the image captured using a short exposure time versus the pixel values from the image captured using a long exposure time, according to some embodiments of the disclosure.
FIG. 6 illustrates a system for generating high dynamic range video frames of a video, according to some embodiments of the disclosure.
FIG. 7 illustrates determining an exposure time ratio, according to some embodiments of the disclosure.
FIG. 8 illustrates assigning a weight to a pixel pair, according to some embodiments of the disclosure.
FIG. 9 illustrates a plot of pixel values from an image captured using a short exposure time versus the pixel values from a image captured using a long exposure time, according to some embodiments of the disclosure.
FIG. 10 illustrates a plot of pixel values from the image captured using a short exposure time versus the pixel values from the image captured using a long exposure time having outliers removed and reweighting, according to some embodiments of the disclosure.
FIG. 11 is a flowchart showing a method for generating high dynamic range video frames of a video, according to some embodiments of the disclosure.
FIG. 12 is a block diagram of an exemplary computing device, according to some embodiments of the disclosure.
FIG. 13 illustrates a merged video frame with fewer or without artifacts, according to some embodiments of the disclosure.

Detailed Description

*Overview*

A high quality image may have a high dynamic range where details are captured in bright areas of the scene, dark areas of the scene, and areas in between. In many scenarios, capturing a single image may not be able to capture details in all areas of the scene. For example, a single image captured using a relatively long exposure time may capture details in dark areas of the scene well while not being able to capture details in bright areas of the scene due to saturation of pixels of the image sensor. A single image captured using a relatively short exposure time may capture details in bright areas of the scene well while not being able to capture details in dark areas of the scene due to not enough photons from the dark areas hitting the pixels of the image sensor.
One technique for producing a high dynamic range (HDR) image is to combine images captured using different exposure times. An imaging device can capture a same scene using different exposure times. For example, an imaging device can capture one image using a long exposure time and another image using a short exposure time. An imaging device can capture one image using a long exposure time, another image using a medium-length exposure time, and yet another image using a short exposure time. The images may be captured by the imaging device one after another quickly of the same scene. The images together may be able to capture details in areas of the scene with different lighting conditions. The images captured using different exposure times can be combined in image post-processing to create a merged image or composite image that would include details in all areas of the scene.

The technique of merging images captured using different exposure times can be applied to generate HDR video frames. A HDR video frame can be generated from images captured using different exposure times. An imaging system can be configured to produce a video having video frames at F frames per second. The imaging system may include a light sensor that can sense the current lighting conditions of the scene. The imaging system may include an image sensor. The imaging system may include an auto-exposure controller that can adjust the exposure times (e.g., exposure lengths) of images captured by the image sensor. The auto-exposure controller may change the exposure times based on information from the light sensor. During a period (e.g., 1/F seconds), the image sensor may capture multiple images with different exposure times, where the exposure times can be controlled by the auto-exposure controller. The multiple images captured with different exposure times during the period can be merged to form a HDR video frame of the video. The merging process may be repeated for many periods to form further HDR video frames of the video.

In some embodiments, the merging process may include analyzing pixel values at a particular pixel location from the images captured using different exposure times and determining a pixel value that best exposes the scene at the pixel location. Determining the pixel value may include weighing pixel values according to the relative exposure times used to capture the images. Determining the pixel value may include finding a weighted average of the pixel values.

The merging of images, e.g., to generate HDR video frames, may use a parameter, exposure time ratio (ETR), to combine pixel values of the images to form a merged (HDR) video frame. The ETR of a first image captured using a first exposure time and a second image captured using a second exposure time may be a ratio of the first exposure time and the second exposure time. The ETR may be defined as the first exposure time divided by the second exposure time. The quality of the merged video frame can depend on accuracy and/or precise knowledge of the ETR.

In some scenarios, the ETR is unknown. In some scenarios, the ETR may be determined based on information retrieved from the auto-exposure controller, and the reported information about the ETR from the auto-exposure controller is inaccurate. The actual exposure times used for capturing the images may not match the reported exposure times from the auto-exposure controller. Due to limitations in the electronics of the imaging system, there may be a (unpredictable and/or unknown) time lag between the time the auto-exposure controller transmits an instruction to change the exposure times to the time the image sensor implements the change in the exposure times. Using an inaccurate ETR to merge images would result in undesirable artifacts in the merged video frame. The undesirable artifacts are visually displeasing and degrade the quality of the merged video frames.

To address this issue, a self-calibrating technique may be implemented to derive the ETR based on the (raw) images themselves. The ETR can be estimated from images captured with different exposure times using an iterative linear regression technique involving accumulators. Pixel pairs having a pair of pixel values from the images may be assigned corresponding weights. The accumulators may be iteratively updated based on the pixel pairs and the corresponding weights. Using the accumulator values, the linear regression technique can derive a slope and an intercept of a best fit line of a plot of pixel values of one image versus pixel values of the other image using the accumulator values. The ETR can be determined based on the slope, which quantifies a linear relationship between the images captured using different exposure times. By applying this technique, the ETR may be estimated based on images captured with different exposure times during a current period, and the estimated ETR may be used in merging images captured with different exposure times during a next/following period to produce a HDR video frame.

In some embodiments, a weight may be assigned to a pixel pair in a manner which can adjust how much impact the pixel pair can have on the estimation. It may be desirable to lessen the impact of pixel pairs which may not help with the estimation or discard those pixel pairs all together. In some cases, a pixel pair may be discarded if one of the pixel values is saturated, and the corresponding weight assigned to the pixel pair is zero. In some cases, a pixel pair may be discarded if it is determined that the pixel pair is an outlier, and the corresponding weight assigned to the pixel pair is zero. In some cases, a corresponding weight assigned to a pixel pair is set based on a magnitude of the difference of a pixel value in the pixel pair from an expected value. The magnitude may be measured as a number of binary digits or based on a most significant bit difference. In some embodiments, a majority of the pixel pairs (e.g., ~95% of all pixel pairs) may be discarded or have a weight of zero while still being able to accurately estimate the slope, e.g., the ETR.

In some embodiments, the pixel pairs used in the iterative linear regression technique may be subsampled from the images captured using different exposure times according to a subsampling ratio. In some embodiments, the pixel pairs used in the iterative linear regression technique may be randomly sampled from the images captured using different exposure times. In some embodiments, the pixel pairs used in the iterative linear regression technique may be sampled from one or more predetermined regions of the images. In some embodiments, the pixel values of the pixel pairs used in the iterative linear regression technique may be quantized to use fewer bits.

Some of the operations used in estimating the ETR may already be carried out as part of the merging of the images captured with different exposure times during the current period. This aspect can make the technique feasible and efficient for producing HDR video frames of a video in real-time.

The ETR is not expected to change drastically between periods, which means that the estimate of the ETR can be reasonably accurate for the next/following period. Even if the ETR changes a lot between periods, the estimate would adapt quickly to the change in the next period (the lag is only just one period or one video frame).

Estimating the ETR from the images captured with different exposure times can produce a more accurate ETR for the merging process, thereby reducing artifacts in the HDR video frames. Using captured images to determine the ETR as opposed to using information from the auto-exposure controller makes the imaging system self-calibrating or makes the imaging system capable of calibrating itself.

The merging process involving the ETR estimated from (raw) images is advantageously independent from and more robust against potential delays or inaccuracies in the auto-exposure controller. Some systems may pose a limit on the auto-exposure controller on how much and/or how quickly the exposure times can be changed or adjusted by the auto-exposure controller to accommodate for the time lag that may occur in the auto-exposure controller. When the merging process is not dependent on the auto-exposure controller, the limit may be removed, and the auto-exposure controller may adapt to changing light conditions more quickly (e.g., without significant danger of causing artifacts in the merged video frames).

_Understanding artifacts in merged video frames_

Figure (FIG.) 1 illustrates a system 100 for generating HDR video frames of a video, according to some embodiments of the disclosure. System 100 includes a light sensor 102. System 100 may include auto-exposure controller 104. System 100 may include image sensor 106.

Light sensor 102 may sense an amount of light in a scene or the lighting condition of the scene. Light sensor 102 may produce and send signal 160 to auto-exposure controller 104. Auto-exposure controller 104 may receive signal 160 from light sensor 102 and determine signal 162 based on signal 160. Auto-exposure controller 104 may control the exposure time (e.g., exposure length) applied by image sensor 106 when capturing images of the scene.

In some embodiments, light sensor 102 may include a light sensor that can generate a signal 160 representing an amount of light or the lighting condition in the scene. In some embodiments, light sensor 102 may detect the amount of light or the lighting condition in the scene based on images captured by image sensor 106. In some embodiments, light sensor 102 may detect the amount of light or the lighting condition in the scene based on an amount of light sensed by one or more pixels of image sensor 106. In some embodiments, light sensor 102 may detect the amount of light or the lighting condition in the scene based on a user setting or configuration (e.g., a user setting to use a flash or a light source).

Image sensor 106 may include electronic pixels to collect photons (e.g., light) that hit the electronic pixels. The photons are converted by the electronic pixels into signals, which may be read out of image sensor 106 as pixel values. The pixel values form an image. An image may include red-green-blue (RGB) pixel values. In some embodiments, image sensor 106 may include charge-coupled device (CCD) sensors. In some embodiments, image sensor 106 may include complementary metal-oxide-semiconductor (CMOS) sensors. Image sensor 106 may include a shutter which may be controlled by auto-exposure controller 104. A shutter can be controlled to set or fix an exposure time for an image being captured by image sensor 106. The shutter may include a mechanical shutter which can physically block or allow light to hit image sensor 106. The shutter may include an electronic shutter that limits an amount of time an electronic pixel collects photons that hit the electronic pixel before the signal is read from the electronic pixel.

System 100 may be configured to produce a HDR video 180 having one or more HDR video frames, e.g., HDR video frame 116, HDR video frame 126, HDR video frame 136, and HDR video frame 146. As an illustration, HDR video 180 may include video frames at a frame rate of 30 frames per second. Image sensor 106, based on signal 162, may produce captured images 108. Captured images 108 illustrate a digital overlap (DOL) technique being used to produce HDR video 180, where exposure times of different lengths are interleaved in time. A period may be 1 divided by the frame rate, e.g., 1/30 seconds, and image sensor 106 may capture images using different exposure times during each period. A period may be referred to as a time-interval. Image sensor 106 may capture two or more images using different exposure times during a period. The different exposure times may be dictated or controlled by auto-exposure controller 104 via signal 162. Auto-exposure controller 104 may determine the different exposure times based on signal 160 from light sensor 102 to adapt the exposure times based on lighting conditions and/or the content of the scene.

For illustration, captured images 108 include, for a first period, image 110 captured using a long exposure time and image 112 captured using a short exposure time. Captured images 108 include, for a second period, image 120 captured using a long exposure time and image 122 captured using a short exposure time. Captured images 108 include, for a third period, image 130 captured using a long exposure time and image 132 captured using a short exposure time. Captured images 108 include, for a fourth period, image 140 captured using a long exposure time and image 142 captured using a short exposure time.

System 100 includes stitching 150 to perform stitching or combining of images captured using different exposure times to produce merged or composite video frames, e.g., e.g., HDR video frame 116, HDR video frame 126, HDR video frame 136, and HDR video frame 146 of HDR video 180. Stitching 150 may be implemented at least partially in hardware.

Stitching 150 may be implemented at least partially in software executable by hardware. Stitching 150 may receive captured images 108 and produce HDR video 180.

Stitching 150 may include merge 114, which may combine or merge image 110 and image 112 using one or more parameters to produce HDR video frame 116. One or more parameters used by merge 114 may be based on information 190 from auto-exposure controller 104, which may not always be precise or accurate. Stitching 150 may include merge 124, which may combine or merge image 120 and image 122 using one or more parameters to produce HDR video frame 126. One or more parameters used by merge 124 may be based on information 190 from auto-exposure controller 104, which may not always be precise or accurate. Stitching 150 may include merge 134, which may combine or merge image 130 and image 132 using one or more parameters to produce HDR video frame 136. One or more parameters used by merge 134 may be based on information 190 from auto-exposure controller 104, which may not always be precise or accurate. Stitching 150 may include merge 144, which may combine or merge image 140 and image 142 using one or more parameters to produce HDR video frame 146. One or more parameters used by merge 144 may be based on information 190 from auto-exposure controller 104, which may not always be precise or accurate.

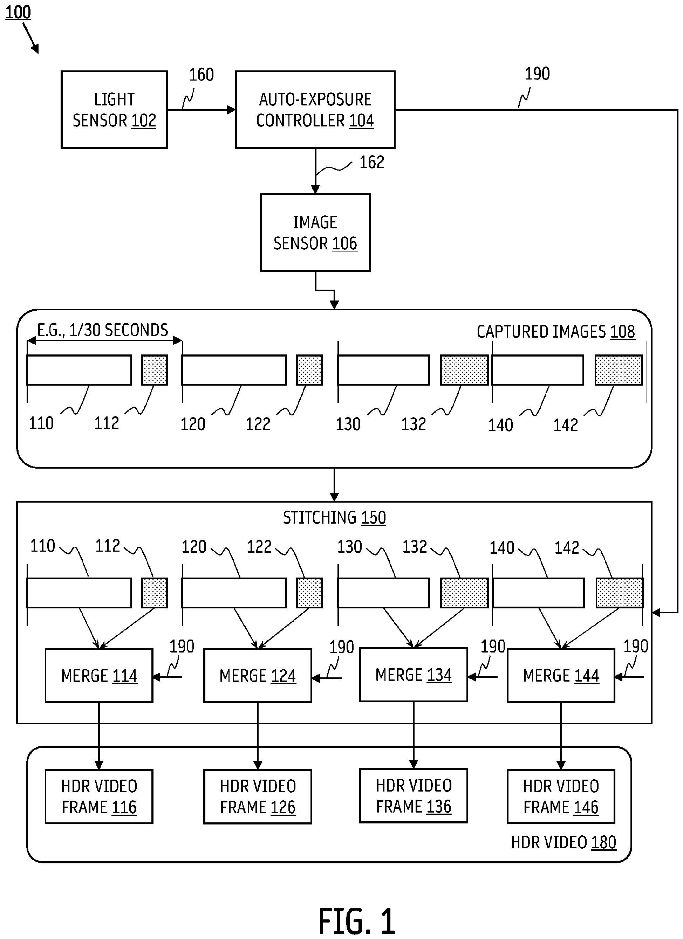

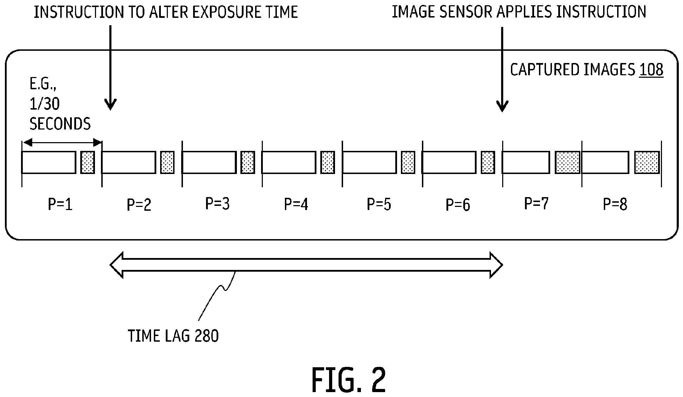

FIG. 2 illustrates an exemplary cause for artifacts in the HDR video frames, according to some embodiments of the disclosure. Captured images 108 includes images captured over several periods, e.g., 8 periods denoted by P=0, 1, 2, 3, 4, 5, 6, 7, and eight. Due to a delay in a connection between auto-exposure controller 104 of FIG. 1 and image sensor 106 of FIG. 1 (e.g., connection carrying signal 162) in the control loop of system 100, there may be a time lag 280 between a time when an instruction to change exposure times from auto-exposure controller 104 is sent to a time when image sensor 106 applies (e.g., responds to or act upon) the instruction to change exposure times. The time lag 280 may be unknown and/or unpredictable. Time lag 280 may drift over time. Time lag 280 may depend on one or more of process, voltage, and temperature variations occurring in system 100.

During the time lag 280, the information 190 of FIG. 1 about ETR from auto-exposure controller 104 may be outdated, inaccurate, or corrupt. Relying on the information 190 from auto-exposure controller 104 about the ETR (by e.g., merge 114, merge 124, merge 134, and merge 144 of FIG. 1) to merge images would result in artifacts in the merged video frames. As illustrated, the instruction may have been sent from auto-exposure controller 104 during a period P=2 but the actual change in exposure times applied to produce captured images 108 is not carried out by image sensor 106 until a period P=7. Merging of images during periods P=2, 3, 4, 5, and 6 may be negatively impacted by the (corrupt) information 190 provided by auto-exposure controller 104 during those periods.

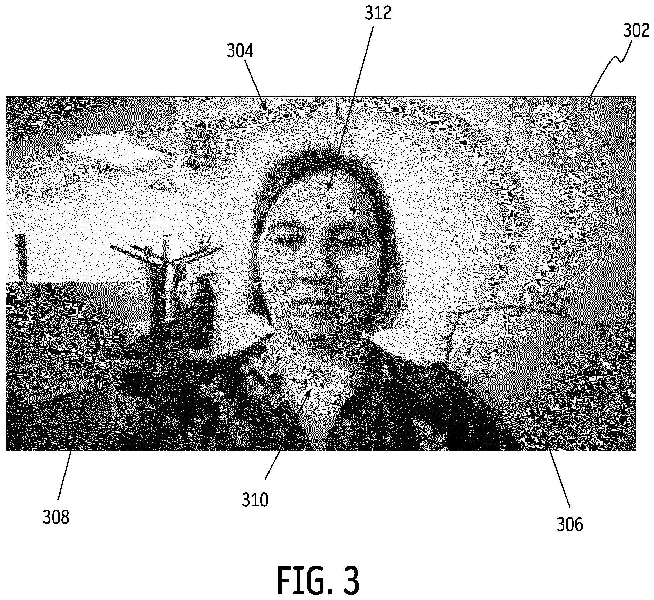

FIG. 3 illustrates a merged video frame 302 having artifacts, according to some embodiments of the disclosure. Due to the (corrupt) information 190 from auto-exposure controller 104 of FIG. 1 being used to merge images captured using different exposure times, the merged video frame 302 exhibits severe artifacts, as seen in, e.g., region 304, region 306, region 308, region 310, and region 312. The severe artifacts may include ringing and/or halos. The severe artifacts may include edges and/or patches.

## Extracting ETR from images

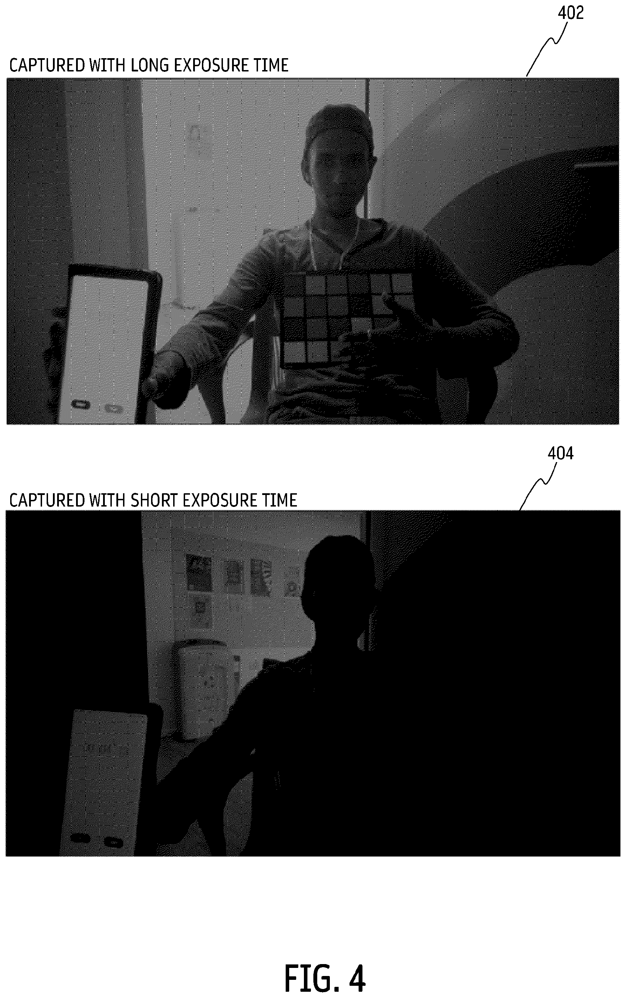

FIG. 4 illustrates a image captured using a long exposure time 402 and an image captured using a short exposure time 404, according to some embodiments of the disclosure. The scene includes a bright region behind the person sitting in a chair. The scene includes a bright region having a display screen of a mobile phone. The scene includes a dark region having the person.

Image captured using a long exposure time 402 captured using a longer exposure time captures details of the dark region well while bright regions are saturated. Image captured using a short exposure time 404 captures details of the bright regions while little to few details of the dark regions are captured. The dark regions are very dark in image captured using a long exposure time 402. The dark regions can be grainy in a post-processed version of image captured using a short exposure time 404.

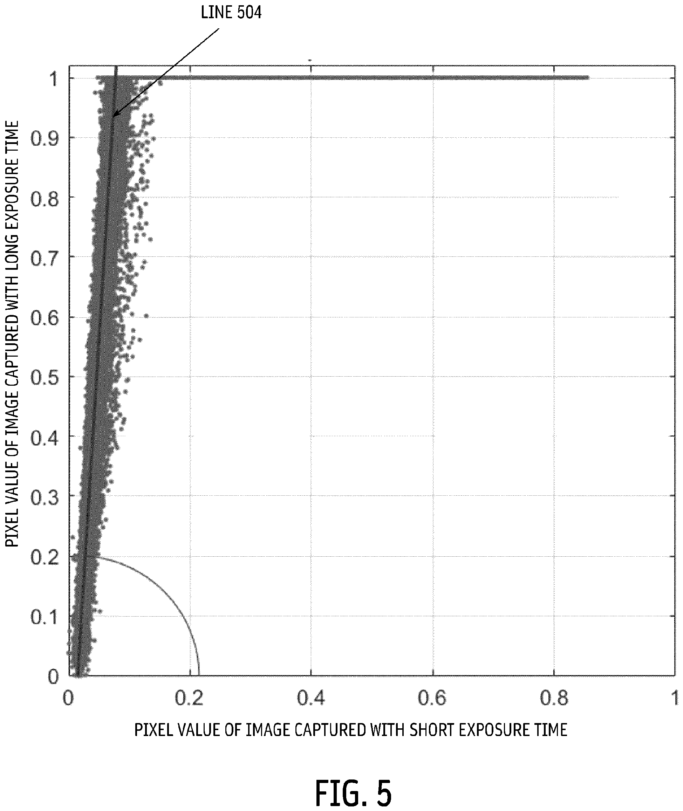

FIG. 5 illustrates a plot of pixel values from the image captured using a short exposure time 404 versus the pixel values from the image captured using a long exposure time 402, according to some embodiments of the disclosure. Pixel pairs, or pairs of pixel values of image captured using a short exposure time 404 and image captured using a long exposure time 402 are plotted in the plot. The plot may be a pixel-scatter plot. The pixel values in the plot are based on an amount of light or number of photons captured. The pixel values in the plot may be normalized based on a range of the amount of light or number of photons that pixels may capture. The image captured using a short exposure time 404, which has a lot of dark pixels, has many pixel values which are within the 0 to 0.1 range. Image captured using a long exposure time 402, which has a lot of saturated pixels, has many pixel values at or near 1.

The plot in FIG. 5 illustrates that there is an affine or linear relationship between the pixel values of image captured using a short exposure time 404 and the pixel values of image captured using a long exposure time 402 (excluding the pixel pairs where pixel values of image captured using a long exposure time 402 is saturated). A line 504 having a slope and an intercept can be fitted to the pixel pairs in the plot to quantify or measure the affine/linear relationship between the pixel values of image captured using a short exposure time 404 and the pixel values of image captured using a long exposure time 402. One of the parameters used in the merging process of multi-exposure images, e.g., exposure time ratio *ETR,* can be determined based on the slope of the best fit line 504. In some embodiments, the exposure time ratio *ETR* is the slope of line 504 defined by:

$$pixel\_value_{long} = ETR \cdot pixel\_value_{short} + bias \qquad \textbf{(eq. 1)}$$

According to **eq. 1,** exposure time ratio *ETR* is the slope of line 504 and the bias *bias* is the intercept of line 504. The bias term may be a property of the image sensor and can be extracted as a by-product of the technique.

The insight illustrated by the plot in FIG. 5 meant that if pixel pairs are processed appropriately and linear regression is applied to the pixel pairs, it is possible to derive the ETR from (raw) images as opposed to relying on corrupt information from the auto-exposure controller.

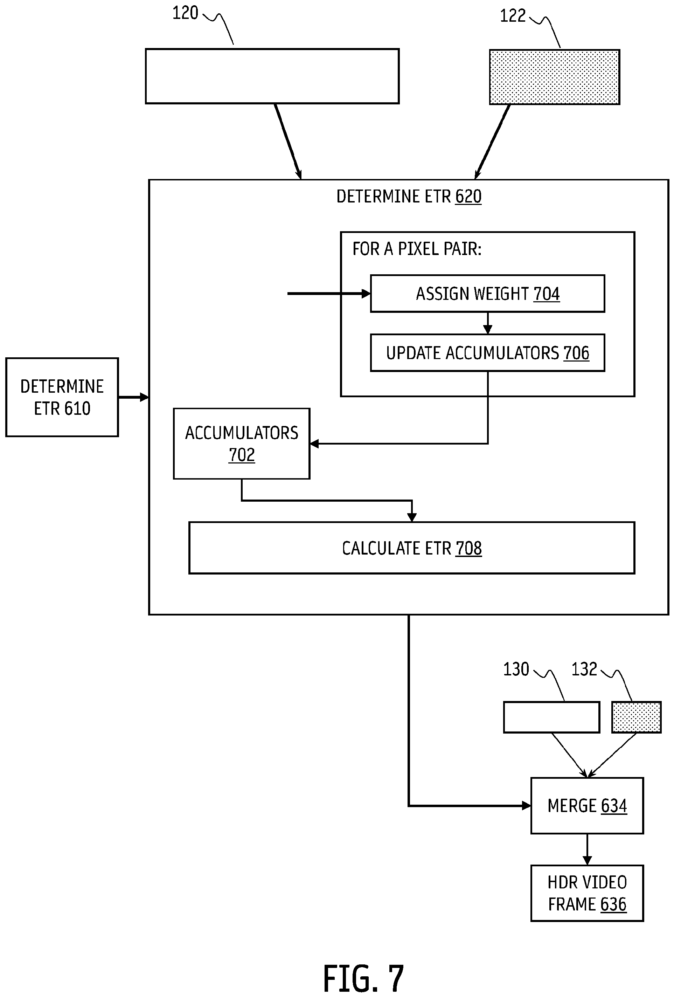

Applying this linear regression technique to derive the ETR from data (e.g., pixel values of the images captured using different exposure times) can result in a system that is more robust to different lighting conditions and content. The system can be implemented efficiently in hardware and/or software for real-time stitching of videos. Exemplary details relating to the system and operations are illustrated with FIGS. 7-11.

*System and methods to extract ETR used in merging images captured with different exposure times*

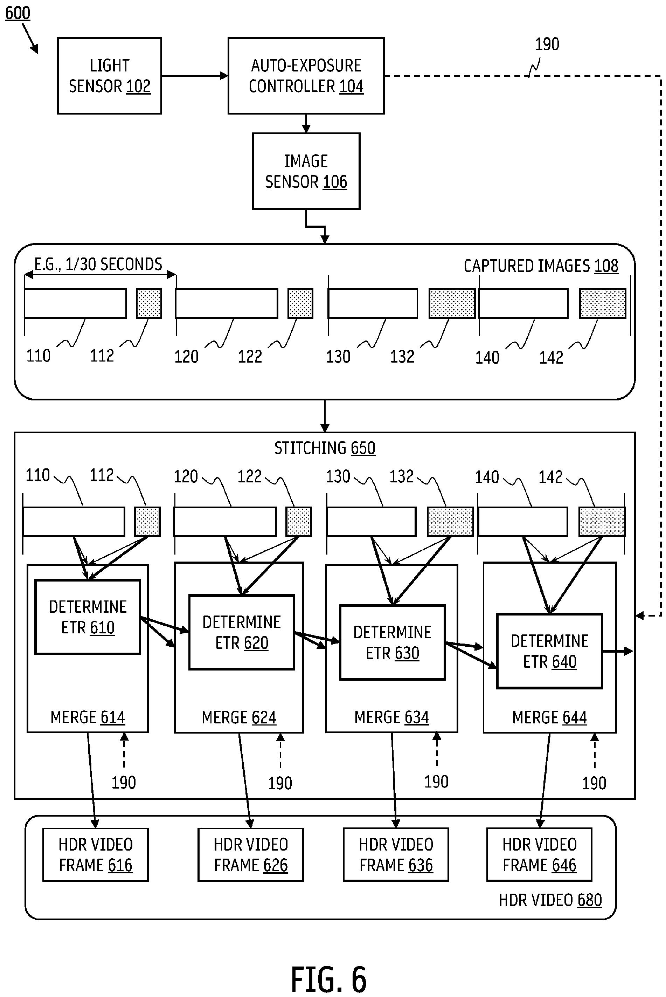

FIG. 6 illustrates a system 600 for generating HDR video frames of a video, according to some embodiments of the disclosure. System 600 may include components such as light sensor 102, auto-exposure controller 104, and image sensor 106 as described with FIG. 1. System 600 includes stitching 650. Stitching 650 may receive captured images 108 and generate HDR video 680. HDR video 680 may have similar properties as HDR video 180 of FIG. 1 except HDR video 680 has merged video frames (e.g., HDR video frame 616, HDR video frame 626, HDR video frame 636, and HDR video frame 646) which are free from artifacts such as artifacts illustrated in FIG. 3. Stitching 650 may improve upon stitching 150 of FIG. 1. Stitching 650 may be implemented at least partially in hardware. Stitching 650 may be implemented at least partially in software executable by hardware.

Stitching 650 may include merge 614, which may combine or merge image 110 and image 112 using one or more parameters to produce HDR video frame 616. One or more parameters used by merge 614 may be based on an ETR estimated from images in captured images 108. One or more parameters used by merge 614 to combine or merge image 110 and image 112 is not based on information 190 from auto-exposure controller 104. Merge 614 may include (at least a part of) determine ETR 610. Determine ETR 610 may receive image 110 and image 112 and determine an ETR or a parameter for merging images such as image 120 and image 122 to produce a merged video frame such as HDR video frame 626. In some embodiments, at least a part of determine ETR 610 is part of merge 614. In some embodiments, at least a part of determine ETR 610 is implemented outside of merge 614.

Stitching 650 may include merge 624, which may combine or merge image 120 and image 122 using one or more parameters to produce HDR video frame 126. One or more parameters used by merge 624 may be based on an ETR estimated from images in captured images 108, such as the ETR estimated by determine ETR 610 from image 110 and image 112. One or more parameters used by merge 624 to combine or merge image 120 and image 122 is not based on information 190 from auto-exposure controller 104. Merge 624 may include (at least a part of) determine ETR 620. Determine ETR 620 may receive image 120 and image 122 and determine an ETR or a parameter for merging images such as image 130 and image 132 to produce a merged video frame such as HDR video frame 636. In some embodiments, at least a part of determine ETR 620 is part of merge 624. In some embodiments, at least a part of determine ETR 620 is implemented outside of merge 624.

Stitching 650 may include merge 634, which may combine or merge image 130 and image 132 using one or more parameters to produce HDR video frame 636. One or more parameters used by merge 634 may be based on an ETR estimated from images in captured images 108, such as the ETR estimated by determine ETR 620 from image 120 and image 122. One or more parameters used by merge 634 to combine or merge image 130 and image 132 is not based on information 190 from auto-exposure controller 104. Merge 634 may include (at least a part of) determine ETR 630. Determine ETR 630 may receive image 130 and image 132 and determine an ETR or a parameter for merging images such as image 140 and image 142 to produce a merged video frame such as HDR video frame 646. In some embodiments, at least a part of determine ETR 630 is part of merge 634. In some embodiments, at least a part of determine ETR 630 is implemented outside of merge 634.

Stitching 650 may include merge 644, which may combine or merge image 140 and image 142 using one or more parameters to produce HDR video frame 646. One or more parameters used by merge 644 may be based on an ETR estimated from images in captured images 108, such as the ETR estimated by determine ETR 630 from image 130 and image 132. One or more parameters used by merge 644 to combine or merge image 140 and image 142 is not based on information 190 from auto-exposure controller 104. Merge 644 may include (at least a part of) determine ETR 640.

Determine ETR 640 may receive image 140 and image 142 and determine an ETR or a parameter for merging images. In some embodiments, at least a part of determine ETR 640 is part of merge 644. In some embodiments, at least a part of determine ETR 640 is implemented outside of merge 644.

In some embodiments, during the merge operation (e.g., merge 614, merge 624, merge 634 and merge 644) to combine/merge images captured using different exposure times to produce an Nth merged video frame (e.g., HDR video frame 616, HDR video frame 626, HDR video frame 636, and HDR video frame 646 respectively), information including pixel pairs from the images are collected and analyzed (e.g., by determine ETR 610, determine ETR 620, determine ETR 630, and determine ETR 640) to extract the ETR or to estimate the ETR. The estimated ETR is then used as a parameter in the merge operation to combine/merge images captured using different exposure times to produce an N+1th merged video frame.

FIG. 7 illustrates determining an ETR, according to some embodiments of the disclosure. Determine ETR 620 is used as an illustrative example to describe how to determine the ETR from the images. The process illustrated for determine ETR 620 may be applied to extract further ETRs and generate further merged video frames based on the further ETRs.

Determine ETR 620 may receive a first image captured using a first exposure time (e.g., image 120, or image captured using a long exposure time) and a second image captured using a second exposure different from the first exposure time (e.g., image 122 or image captured using a short exposure time). The first image may include pixel values. The second image may include pixel values. A pixel pair may include a first pixel value of the first image and a second pixel value of the second image. In the following description, a pixel value of the first image is represented as *long_pixel,* and a pixel value of the second image is represented as *short_pixel.* The first pixel value and the second pixel value correspond to each other in that they correspond to the same electronic pixel of the image sensor that captured the first image and the second image. Determine ETR 620 may receive a first pixel pair comprising the first pixel value of the first image and the second pixel value of the second image.

In some embodiments, determine ETR 620 may receive a plurality of pixel pairs, where a pixel pair includes a pixel value from the first image and the second image. The pixel pairs may be subsampled from the first image and the second image. The pixel pairs may be sampled from a predetermined region of the first image and the second image. The pixel pairs may be sampled randomly from the first image and the second image. The pixel pairs may be quantized to reduce the number of bits used in storing the pixel pairs and in computations involving the pixel pairs.

Determine ETR 620 may perform an iterative linear regression process involving accumulators 702. The iterative linear regression process may perform processing of individual pixel pairs and iteratively updates accumulators 702 based on the pixel pairs. Determine ETR 620 iteratively updates information stored in accumulators 702 incrementally as new pixel pairs are received and processed, instead of calculating the coefficients based on all pixel pairs of the first image and the second image at once. The iterative linear regression process can be efficient and allows for on-the-fly estimation of ETR as the pixel pairs are processed for merging purposes. Pixel pairs may be received and/or processed in a raster scan order and statistics may be collected in accumulators 702 as the pixel pairs are processed. The iterative linear regression process may be based on a highly efficient formulation of a least squares regression, which may be optimized for minimum operations per pixel and memory footprint. The iterative linear regression process may be feasible for implementation in software and/or hardware.

To initiate the iterative linear regression process for estimating ETR, determine ETR 620 may create and/or initialize accumulators 702. ETR 620 may initialize the values of accumulators 702 with a value of 0. In some embodiments, accumulators 702 includes accumulators that can store values that may be used in calculating a slope and an intercept of a best fit line (e.g., a line that minimizes a least squares error of the data points). In some embodiments, accumulators 702 includes the following accumulators, which may be initialized with a value 0:

$$acc\_long = 0$$

$$acc\_short = 0$$

$$acc\_long\_sq = 0$$

$$acc\_long\_short = 0$$

$$acc\_weight = 0$$

In the following description, *acc_long* may be referred to as a first accumulator value. *acc_short* may be referred to as a second accumulator value. *acc_long_sq* may be referred to as a third accumulator value. *acc_long_short* may be referred to as a fourth accumulator value. *acc_weight* may be referred to as a fifth accumulator value.

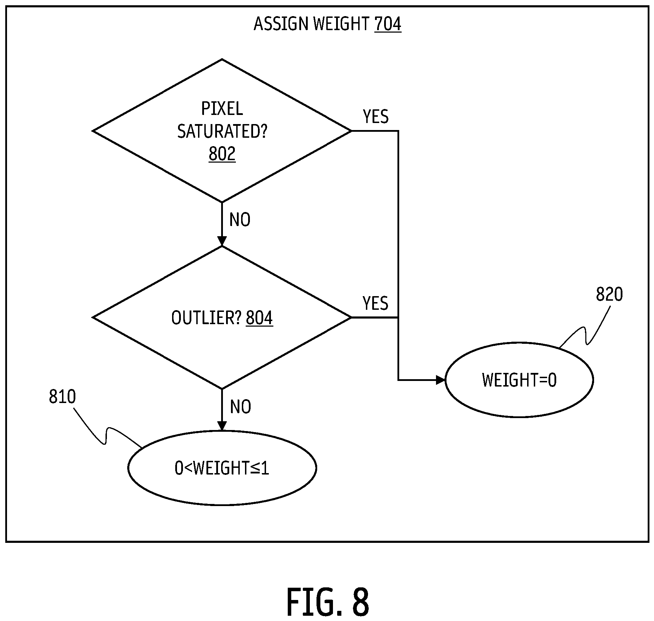

For a pixel pair, determine ETR 620 may include assign weight 704 to assign a weight (*weight*) to the pixel pair. The weight may represent the validity or an extent of the validity of the pixel to the (overall) estimate of the ETR. The value assigned as the weight for the pixel pair may represent how much weight should be given or how much impact the pixel pair should have on the estimate of the ETR. For example, assign weight 704 may assign a first weight to the first pixel pair. Assign weight 704 may assign a weight based on the pixel values of the pixel pair. Assign weight 704 may assign a weight based on an expected ETR (e.g., an ETR of a previous frame, an ETR determined by determine ETR 610). A detailed illustration of exemplary operations of assign weight 704 is depicted in FIG. 8.

For the pixel pair, determine ETR 620 may include update accumulators 706. Update accumulators 706 may update one or more accumulator values of accumulators 702 using the first weight, the first pixel value of the first pixel pair, and the second pixel value of the first pixel pair. In some embodiments, update accumulators 706 may be updated according to the following equations:

$$acc\_long +\!= weight \cdot long\_pixel \qquad\qquad \textbf{(eq. 2)}$$

$$acc\_short +\!= \ weight \cdot short\_pixel \qquad\qquad \textbf{(eq. 3)}$$

$$acc\_long\_sq +\!= weight \cdot long\_pixel^2 \qquad\qquad \textbf{(eq. 4)}$$

$$acc\_long\_short +\!= weight \cdot long\_pixel \cdot short\_pixel \qquad \textbf{(eq. 5)}$$

$$acc\_weight +\!= weight \qquad\qquad\qquad \textbf{(eq. 6)}$$

Update accumulators 706 may implement **eq. 2** by updating a first accumulator value *acc_long* by adding the first accumulator value *acc_long* by a first product of the first weight *weight* and the first pixel value *long_pixel.* The sum is used as the updated first accumulator value *acc_long.*

Update accumulators 706 may implement **eq. 3** by updating a second accumulator value *acc_short* by adding the second accumulator value *acc_short* by a second product of the first weight *weight* and the second pixel value *short_pixel.* The sum is used as the updated second accumulator value *acc_short.*

Update accumulators 706 may implement **eq. 4** by updating a third accumulator value *acc_long_sq* by adding the third accumulator value *acc_long_sq* by a third product of the first weight *weight* and a square of the first pixel value *long_pixel*[2]*.* The sum is used as the updated third accumulator value *acc_long_sq.*

Update accumulators 706 may implement **eq. 5** by updating a fourth accumulator value *acc_long_short* by adding the fourth accumulator value *acc_long_short* by a fourth product of the first weight *weight,* the first pixel value *long_pixel,* and the second pixel value *short_pixel.* The sum is used as the updated fourth accumulator value *acc_long_short.*

Update accumulators 706 may implement **eq. 6** by updating a fifth accumulator value *acc_weight* by adding the fifth accumulator value *acc_weight* by the first weight *weight.* The sum is used as the updated fifth accumulator value *acc_weight.*

Determine ETR 620 may perform operations of assign weight 704 and update accumulators 706 iteratively for additional pixel pairs of the first image and the second image. For example, determine ETR 620 may receive a second pixel pair comprising a third pixel value of the first image, and a fourth pixel value of a second image. Assign weight 704 may assign a second weight to the second pixel pair. Update accumulators 706 may the accumulator values using the second weight, the third pixel value, and the fourth pixel value (e.g., in accordance with **eq. 2-6**).

Calculate ETR 708 may use accumulators 702 to produce an estimate of ETR, e.g., after pixel pairs of the first image and the second image are processed and accumulators 702 have been iteratively updated using the pixel pairs. Calculate ETR 708 may determine a parameter for merging a third image (e.g., image 130) and a fourth image (e.g., image 132) based on the one or more accumulator values of accumulators 702. The parameter may include an ETR. The parameter may include an estimate of a slope of a line fitted to a plot of pixel values of the first image versus pixel values of the second image. The estimate of ETR may be used for merging images to produce a following or next merged video frame. The estimate of ETR may be provided to merge 634 to merge image 130 and image 132. Merge 634 may merge the third image (e.g., image 130 in a following period) and the fourth image (e.g., image 132 in the following period) using the parameter, e.g., the estimate of ETR, to generate a first merged video frame of a video (e.g., HDR video frame 636).

In some embodiments, calculate ETR 708 may carry out calculations which may be derived from applying 2x2 matrix inversion associated with least squares regression. Calculate ETR 708 may carry out calculations that results in a best fit line that minimizes the sum of squared residuals between the actual data points and the predicted values from the best fit line using the values in accumulators 702. The calculations produce the slope of the best fit line *ETR* and the intercept of the best fit line *bias*. The calculations in calculate ETR 708 to determine one or more parameters (e.g., the slope of the best fit line *ETR* and the intercept of the best fit line *bias*) are illustrated as follows:

$$mean\_short = |acc\_short/acc\_weight| \quad \textbf{(eq. 7)}$$

$$scale = 2^{-\lceil log_2(mean\_short) \rceil} \quad \textbf{(eq. 8)}$$

$$acc\_long \mathrel{*}= scale \quad \textbf{(eq. 9)}$$

$$acc\_short \mathrel{*}= scale \quad \textbf{(eq. 10)}$$

$$acc\_long\_sq \mathrel{*}= scale^2 \quad \textbf{(eq. 11)}$$

$$acc\_longshort \mathrel{*}= scale^2 \quad \textbf{(eq. 12)}$$

$$T_{00} = acc\_long\_sq^2 + acc\_long^2 \quad \textbf{(eq. 13)}$$

$$T_{11} = acc\_weight^2 + acc\_long^2 \quad \textbf{(eq. 14)}$$

$$T_{01} = acc\_long \cdot (acc\_long\_sq + acc\_weight) \quad \textbf{(eq. 15)}$$

$$T_{disc} = T_{00} \cdot T_{11} - T_{01}^2 \quad \textbf{(eq. 16)}$$

$$k_1 = acc\_long\_sq \cdot acc\_longshort + acc\_long \cdot acc\_short \quad \textbf{(eq. 17)}$$

$$k_2 = acc\_long \cdot acc\_longshort + acc\_weight \cdot acc\_short \quad \textbf{(eq. 18)}$$

$$p_1 = k_1 \cdot T_{11} - k_2 \cdot T_{01} \quad \textbf{(eq. 19)}$$

$$p_2 = k_2 \cdot T_{00} - k_1 \cdot T_{01} \quad \textbf{(eq. 20)}$$

$$ETR = p_1/T_{disc} \quad \textbf{(eq. 21)}$$

$$bias = p_2/(T_{disc} \cdot scale) \quad \textbf{(eq. 22)}$$

It is envisioned that other equivalent calculations may be performed in calculate ETR 708 to determine the slope and intercept of the best fit line based on values in accumulators 702.

FIG. 8 illustrates assigning, by assign weight 704 of FIG. 7, a weight to a pixel pair, according to some embodiments of the disclosure. The weight assigned to a pixel pair may be used in updating the accumulator values as described with FIG. 7.

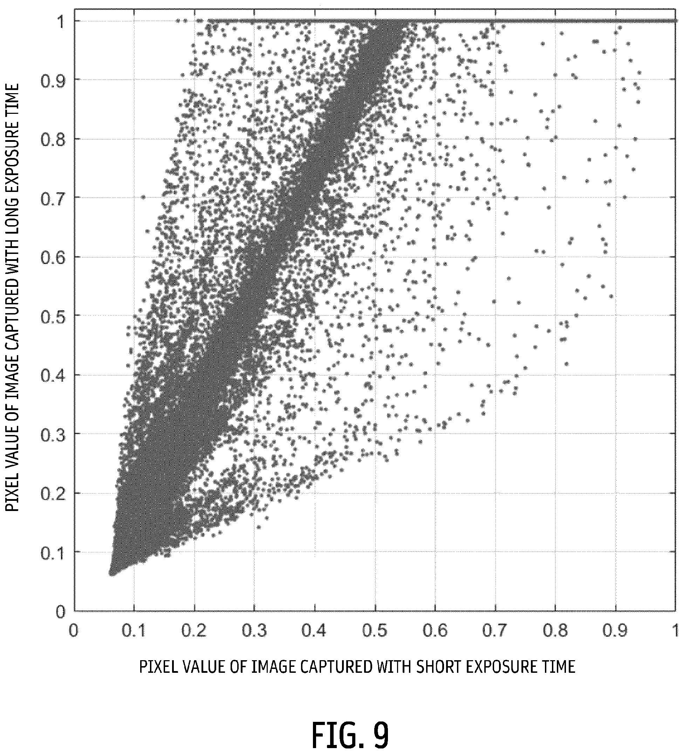

In some embodiments, the pixel pairs of images captured using different exposure times may have a large percentage of bad data points or outliers. In FIG. 5, the saturated pixel values (e.g., pixel values at 1 or close to 1) from the image captured using a long exposure time 402 are not good data points for the linear regression process. In FIG. 9, the saturated pixel values (e.g., pixel values at 1 or close to 1) from the image captured using a long exposure time 402 and pixel pairs located far away from the best fit line are not good data points for linear regression process. The pixel pairs located far away from the best fit line can be caused by motion in the scene (e.g., due to large moving objects or camera motion). Appropriately setting the weight for the pixel pairs can be beneficial in cleaning up the data points used by the linear regression process that estimates the ETR.

A weight may have a value of 0. A weight may have a value of 1. A weight may have a value between 0 and 1.

When a weight is 0, the accumulator values are not updated or remains the same for the iteration. The pixel pair makes no impact on the estimation of ETR.

When a weight is 1, the accumulator values are updated based on the pixel pair, e.g., according to **eq. 2-6.** The pixel pair makes an impact to the estimation of ETR.

When a weight is between 0 and 1, the accumulator values are updated based on the pixel pair and scaled by the weight. The pixel pair makes a scaled impact to the estimation of ETR.

When the pixel pair is not a good data point (e.g., invalid), the weight may be set to 0.

When the pixel pair is a good data point (e.g., valid), the weight may be set to 1.

When the pixel pair is an outlier, the weight may be set to 0.

When the pixel pair has a pixel value which is different from an expected value, the magnitude of the difference may be used to set the weight between 0 and 1.

As an illustration, assign weight 704 may assign a first weight to a first pixel pair. The first pixel pair may include a first pixel value of a first image captured using a first exposure time, and a second pixel value of a second image captured by a second exposure time different from the first exposure time.

In 802, assign weight 704 may perform a first check. The first check may include determining whether the first pixel value or the second pixel value indicates saturation. The first check may determine whether the first pixel value or the second pixel value has a maximum value. The first check may determine whether the first pixel value or the second pixel value exceeds a threshold value. The threshold value may be 0.75. The threshold value may be 0.9. The first check may determine whether the first pixel pair is not a good data point. In response to determining that the first pixel value or the second pixel value indicates saturation (e.g., the YES path from 802 is followed), assign weight 704 may proceed to 820, which sets the first weight to 0. In response to determining that the first pixel value or the second pixel value does not indicate saturation (e.g., the YES path from 802 is followed), assign weight 704 may proceed to 804.

In 804, assign weight 704 may perform a second check. The second check may include an outlier-rejection mechanism. The second check may include determining whether the first pixel pair is an outlier. An underlying assumption made in the outlier-rejection mechanism is that the ETR between periods is not expected to change a lot, or the change is small. Based on the assumption, the second check may perform a check on how well the first pixel pair fits, corresponds, or matches the ETR estimate produced in a previous period, $ETR_{prev}$.

In 804, assign weight 704 may determine the first weight based on a further parameter determined for merging a fifth image and a sixth image, e.g., the ETR estimate produced in a previous period $ETR_{prev}$. Assign weight 704 may determine the first weight based on a yet further parameter, e.g., determined for merging a fifth image and a sixth image, e.g., the bias estimate produced in one or more previous periods. The bias estimate likely does not change between periods and may be predetermined from one or more previous periods. Referring back to FIG. 7, the further parameter may include the ETR estimate produced by determine ETR 610 from image 110 and image 112. The further parameter may be used by assign weight 704 of determine ETR 620.

How well the first pixel pair fits, corresponds, or matches the $ETR_{prev}$ can indicate whether the first pixel pair is an outlier (e.g., the first pixel pair is a poor indicator of the current ETR to be estimated). If the first pixel pair is an outlier (e.g., following the YES path from 804), assign weight 704 may assign a weight of 0 in 820.

How well the first pixel pair fits, corresponds, or matches the $ETR_{prev}$ can indicate an extent of which the first pixel pair is a good indicator of the current ETR to be estimated. Assign weight 704 may assign a weight according to how well the first pixel pair fits, corresponds, or matches the $ETR_{prev}$. If the first pixel pair is not an outlier (e.g., following the NO path from 804), assign weight 704 may assign a weight between 0 and 1 (not 0) in 810. In 810, assign weight 704 may assign a weight according to how well the first pixel pair fits, corresponds, or matches the $ETR_{prev}$.

The ETR estimate produced in a previous period $ETR_{prev}$ may yield an expected value for the first pixel value based on the second pixel value, or an expected value for the second pixel value based on the first pixel value. The ETR estimate produced in a previous period $ETR_{prev}$ can provide an estimated value for the first pixel value or the second pixel value, because $ETR_{prev}$ offers a reasonable estimate for how the first pixel value and the second pixel value in the first pixel pair relate to each other.

The following example relating to 804 in assign weight 704 is described for a first pixel pair having a first pixel value (e.g., a long exposure pixel, or *long_pixel*) from a first image (e.g., image captured using a long exposure time) and a second pixel value (e.g., a short exposure pixel, or *short_pixel*) from a second image (e.g., image captured using a short exposure time). It is envisioned that the first pixel value and the second pixel value may be interchangeable in the procedure. It is envisioned that the example can be applied to assign other weights to other pixel pairs.

In 804, assign weight 704 may determine an expected value (e.g., a normalized long exposure pixel *long_pixel_normed*) for the second pixel value (e.g., *short_pixel*). The expected value *long_pixel_normed* for the second pixel value (e.g., *short_pixel*) can be determined based on the ETR estimate from a previous period $ETR_{prev}$ and the first pixel value *long_pixel*. The expected value *long_pixel_*normed for the second pixel value (e.g., *short_pixel*) can be determined based on the bias estimate from one or more previous periods *bias*. The expected value *long_pixel_normed* for the second pixel value may be determined by applying an inverse ETR with $ETR_{prev}$ according to the following equation:

$$long\_pixel\_normed = \left(1/ETR_{prev}\right) \cdot (long\_pixel - bias) \qquad \textbf{(eq. 23)}$$

*long_pixel_normed,* the expected value for the second pixel value, may be aligned to the second pixel value *short_pixel* by applying the inverse ETR with $ETR_{prev}$.

In 804, assign weight 704 may compare the expected value (e.g., a normalized long exposure pixel *long_pixel_normed*) for the second pixel value (e.g., *short_pixel*) and the second pixel value e.g., short exposure pixel *short_pixel*). Assign weight 704 may compare the magnitude of the expected value (e.g., a normalized long exposure pixel *long_pixel_normed*) for the second pixel value (e.g., *short_pixel*) and the magnitude the second pixel value e.g., short exposure pixel *short_pixel*).

In 804, assign weight 704 may obtain a measure of the magnitude of the expected value (e.g., a normalized long exposure pixel *long_pixel_normed*) for the second pixel value (e.g., *short_pixel*) by finding the leading zero of the binary value (e.g., perform a binary operation that counts a number of leading zeros for *long_pixel_normed*). The leading zero of *long_pixel_normed* may be denoted as *lz_long_norm.*

In 804, assign weight 704 may obtain a measure of the magnitude of the second pixel value (e.g., short exposure pixel *short_pixel*) by finding the leading zero of the binary value (e.g., perform a binary operation that counts a number of leading zeros for *short_pixel*). The leading zero of *short_pixel* may be denoted as *lz_short.*

In 804, assign weight 704 may determine whether the second pixel value (e.g., *short_pixel*) indicates a deviation from an expected value for the second pixel value (e.g., a normalized long exposure pixel long_pixel_normed). Assign weight 704 may compare the magnitudes of the second pixel value and the expected value for the second pixel value. Assign weight 704 may determine whether lz_long_norm equals to *lz_short.*

If *lz_long_norm* equals to *lz_short,* the magnitudes of the second pixel value and the expected value for the second pixel value are considered substantially the same or similar, which means that the second pixel value does not indicate a deviation from the expected value for the second pixel value or does not deviate from the expected value for the second pixel value. In response to determining that the second pixel value does not indicate the deviation, the second check in 804 may consider the first pixel pair to not be an outlier. The NO path from 810 is followed. In 810, assign weight 704 may proceed to setting the first weight for the first pixel pair between 0 and 1 (not 0) (e.g., the first weight may be set at a value that is greater than 0 and less than or equal to 1).

If *lz_long_norm* does not equal to *lz_short,* the magnitudes of the second pixel value and the expected value for the second pixel value are considered different, which means that the second pixel value indicates a deviation from the expected value for the second pixel value, or deviates from the expected value for the second pixel value. In response to determining that the second pixel value indicates the deviation, the second check in 804 may consider the first pixel pair to be an outlier. The YES path from 804 is followed. In 820, assign weight 704 may proceed to setting the first weight for the first pixel pair to 0.

In 810, assign weight 704 may implement a weighting technique that is computationally efficient, and adds minimal extra compute requirements to the merging process. The weighting technique may add value to the linear regression process by carefully weighting contributions of pixel pairs to the estimation of ETR.

In some embodiments, assign weight 704 may determine how different the second pixel value (e.g., *short_pixel*) is from the expected value for the second pixel value (e.g., *long_pixel_normed*). In some embodiments, assign weight 704 may determine a difference between the second pixel value and the expected value for the second pixel value. Assign weight 704 may find a most significant bit (MSB) difference between the second pixel value and the expected value for the second pixel value using an efficient binary operation. An MSB difference may compare the second pixel value and the expected value for the second pixel value by determining a position of a left most (most significant) bit where the values differ. The leading zeros (which may be the same for the second pixel value and the expected value for the second pixel value since *lz_long_norm* equals to *lz_short*) may be removed using a bit-shift operation, and bits starting from the left most bit are compared one by one. The MSB difference is the bit position (counting from the left) where the bits differ. The MSB difference can quantify in an efficient manner how different the second pixel value and the expected value for the second pixel value are or how large the difference between the second pixel value and the expected value for the second pixel value is in orders of binary magnitude.

An example of the binary operation performed to determine the MSB difference $D_{MSB}$ as follows:

$$D_{MSB} = |short\_pixel - long\_pixel\_normed| >> (lz\_short - LUT\_len\_bits)$$

$$\textbf{(eq. 24)}$$

$2^{LUT\_len\_bits}$ may represent a length of a look up table that may be used to store monotonically descending weights values indexed by different values for the MSB difference $D_{MSB}$ between the second pixel value and the expected value for the second pixel value. >> may represent a right bit-shift of the left operand by a number of bits specified in the right operand.

Another example of the binary operation performed to determine the MSB difference $D_{MSB}$ may include an exclusive-OR (XOR) operation on the bits of the second pixel value and the expected value for the second pixel value to determine the MSB difference $D_{MSB}$, e.g., the position at which the bits differ. In some cases, the position at which the bits differ is a larger number when the magnitude of the difference is larger. The position at which the bits differ is a smaller number when the magnitude of the difference is smaller.

In 810, assign weight 704 may set the first weight according to a magnitude of the difference. The first weight may have an inverse relationship with the magnitude of the difference. The larger the magnitude, the farther away the first pixel pair is from the ETR estimated in previous period, and the first pixel pair may be a poorer data point for estimating the ETR in the current period.

In some embodiments, assign weight 704 may set the first weight using a look up table, e.g., *weight = LUT($D_{MSB}$)*. Values of the look up table may monotonically decrease as the index values (e.g., the MSB difference $D_{MSB}$) increases.

When the MSB difference $D_{MSB}$ is small, the difference between the second pixel value and the expected value for the second pixel value is small. A larger weight value (e.g., 1 or closer to 1) may be assigned to the first weight in 810 by assign weight 704. When the MSB difference $D_{MSB}$ is large, the difference between the second pixel value and the expected value for the second pixel value is big. A smaller weight value (e.g., closer to 0) may be assigned to the first weight in 810 by assign weight 704.

Operations in 804 for determining whether a pixel pair is an outlier may be applied to determine an expected value for the first pixel value (e.g., a long exposure pixel *long_pixel*). Operations in 804 may follow the procedures to determine whether the first pixel value (e.g., a long exposure pixel *long_pixel*) deviates from the expected value for the first pixel value. In some embodiments, operations in 804 may include determining whether the first pixel value indicates a deviation from an expected value for the first pixel value. In some embodiments, operations in 804 may include determining a difference of the first pixel value and an expected value for the first pixel value and setting a weight according to a magnitude of the difference.

In some embodiments, when assign weight 704 is applied to estimate an ETR for a first period where no previous estimates of ETR are available, assign weight 704 may assign a weight of 1 to all pixel pairs that do not include at least one pixel value that indicates saturation.

In some embodiments, determining the expected value of the first pixel value or the expected value of the second pixel value may be performed as part of the merging procedure, and does not add additional computation load to the overall system.

In some embodiments, because an image may include millions of pixel values, even if a weight of 0 is assigned to 95% of the pixel pairs, well over a hundred-thousand data points remain. The remaining data points may still be used effectively to estimate the ETR, especially when the remaining data points exclude outliers and the ETR estimate would be less impacted by outliers or poor data points.

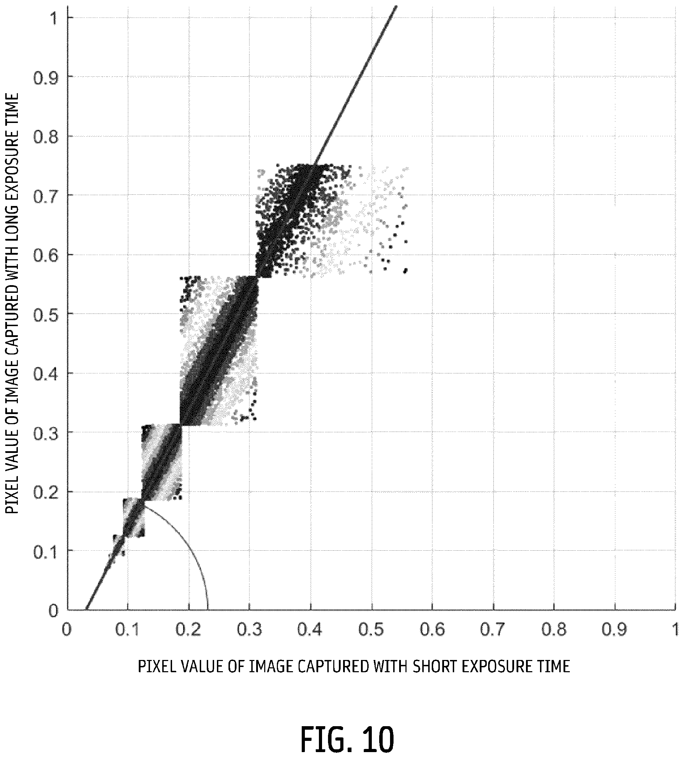

FIG. 10 illustrates a plot of pixel values from the image captured using a short exposure time versus the pixel values from the image captured using a long exposure time having outliers removed and reweighting (e.g., implementing operations illustrated in FIG. 8 in assign weight 704), according to some embodiments of the disclosure. FIG. 10 can be juxtaposed against the full set of pixel pairs plotted in FIG. 9. Pixel pairs with a weight of 0 are not shown in the plot in FIG. 10. Different shading of pixel pairs may indicate differences in the weights assigned to the pixel pairs, e.g., based on a magnitude of a deviation of a pixel value in a pixel pair from an expected value of the pixel value.

*An exemplary method for generating HDR video frames of a video*

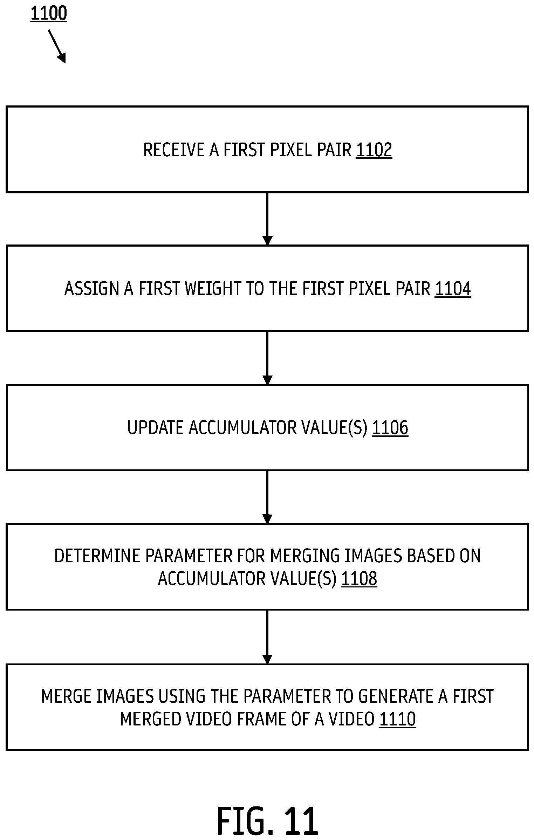

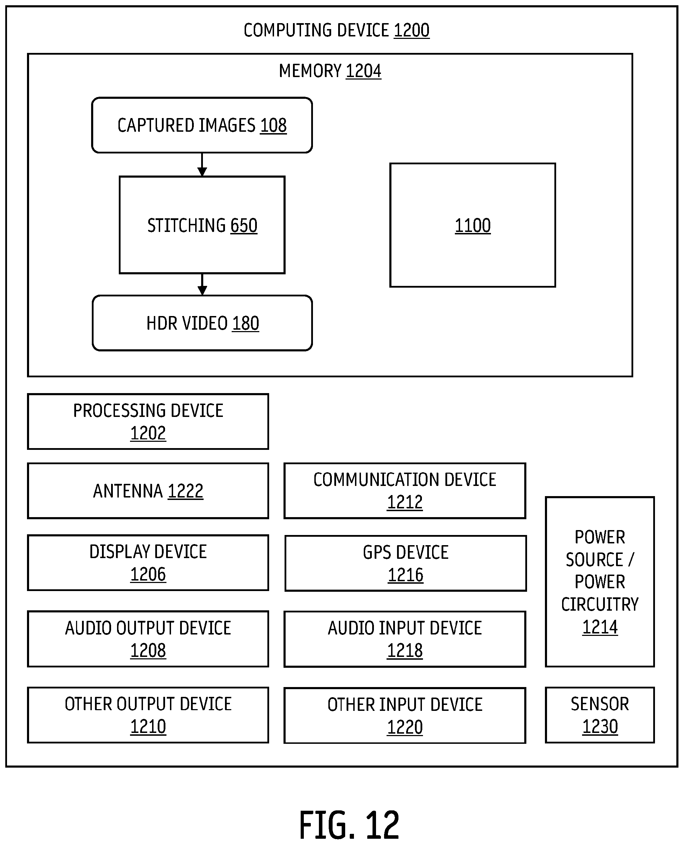

FIG. 11 is a flowchart showing a method for generating HDR video frames of a video, according to some embodiments of the disclosure. Method 1100 can be performed using a computing device, such as computing device 1200 in FIG. 12. Method 1100 may be performed using one or more parts illustrated in FIGS. 1, and 6-8. Method 1100 may be an exemplary method performed by parts as illustrated in FIGS. 1, and 6-8.

In 1102, a first pixel pair may be received. The first pixel pair may include a first pixel value of a first image captured using a first exposure time, and a second pixel value of a second image captured by a second exposure time different from the first exposure time.

In 1104, a first weight can be assigned to the first pixel pair.

In 1106, one or more accumulator values may be updated using the first weight, the first pixel value, and the second pixel value.

In 1108, a parameter for merging a third image and a fourth image may be determined based on the one or more accumulator values.

In 1110, the third image and the fourth image may be merged using the parameter to generate a first merged video frame of a video.

## *Exemplary computing device*

FIG. 12 is a block diagram of an apparatus or a system, e.g., an exemplary computing device 1200, according to some embodiments of the disclosure. One or more computing devices 1200 may be used to implement the functionalities described with the FIGS. and herein. A number of components are illustrated in the FIGS. can be included in the computing device 1200, but any one or more of these components may be omitted or duplicated, as suitable for the application. In some embodiments, some or all of the components included in the computing device 1200 may be attached to one or more motherboards. In some embodiments, some or all of these components are fabricated onto a single system on a chip (SoC) die. Additionally, in various embodiments, the computing device 1200 may not include one or more of the components illustrated in FIG. 11, and the computing device 1200 may include interface circuitry for coupling to the one or more components. For example, the computing device 1200 may not include a display device 1206, and may include display device interface circuitry (e.g., a connector and driver circuitry) to which a display device 1206 may be coupled. In another set of examples, the computing device 1200 may not include an audio input device 1218 or an audio output device 1208 and may include audio input or output device interface circuitry (e.g., connectors and supporting circuitry) to which an audio input device 1218 or audio output device 1208 may be coupled.

The computing device 1200 may include a processing device 1202 (e.g., one or more processing devices, one or more of the same types of processing device, one or more of different types of processing device). The processing device 1202 may include electronic circuitry that process electronic data from data storage elements (e.g., registers, memory, resistors, capacitors, quantum bit cells) to transform that electronic data into other electronic data that may be stored in registers and/or memory. Examples of processing device 1202 may include a CPU, a GPU, a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1200 may include a memory 1204, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1204 includes one or more non-transitory computer-readable storage media. In some embodiments, memory 1204 may include memory that shares a die with the processing device 1202.

In some embodiments, memory 1204 includes one or more non-transitory computer-readable media storing instructions executable to perform operations described with FIGS. 1-11 and herein, such as the method 1100 illustrated in FIG. 11.

Memory 1204 may store instructions that encode one or more exemplary parts. Exemplary parts, such as one or more components or parts in stitching 650, may be encoded as instructions and stored in memory 1204 are depicted. The instructions stored in the one or more non-transitory computer-readable media may be executed by processing device 1202.

In some embodiments, memory 1204 may store data, e.g., data structures, binary data, bits, metadata, files, blobs, etc., as described with the FIGS. and herein. Exemplary data, such as captured images 108, and HDR video 180, may be stored in memory 1204.

In some embodiments, the computing device 1200 may include a communication device 1212 (e.g., one or more communication devices). For example, the communication device 1212 may be configured for managing wired and/or wireless communications for the transfer of data to and from the computing device 1200. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1212 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1212 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1212 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1212 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication device 1212 may operate in accordance with other wireless protocols in other embodiments. The computing device 1200 may include an antenna 1222 to facilitate wireless communications and/or to receive other wireless communications (such as radio frequency transmissions). The computing device 1200 may include receiver circuits and/or transmitter circuits. In some embodiments, the communication device 1212 may manage wired communications, such as electrical, optical, or any other suitable communication protocols (e.g., the Ethernet). As noted above, communication device 1212 may include multiple communication chips. For instance, a first communication device 1212 may be dedicated to shorter-range wireless communications such as Wi-Fi or Bluetooth, and a second communication device 1212 may be dedicated to longer-range wireless communications such as global positioning system (GPS), EDGE, GPRS, CDMA, WiMAX, LTE, EV-DO, or others. In some embodiments, a first communication device 1212 may be dedicated to wireless communications, and a second communication device 1212 may be dedicated to wired communications.

The computing device 1200 may include power source / power circuitry 1214. The power source / power circuitry 1214 may include one or more energy storage devices (e.g., batteries or capacitors) and/or circuitry for coupling components of the computing device 1200 to an energy source separate from the computing device 1200 (e.g., DC power, AC power, etc.).

The computing device 1200 may include a display device 1206 (or corresponding interface circuitry, as discussed above). Display device 1206 may include any visual indicators, such as a heads-up display, a computer monitor, a projector, a touchscreen display, a liquid crystal display (LCD), a light-emitting diode display, or a flat panel display, for example.

The computing device 1200 may include an audio output device 1208 (or corresponding interface circuitry, as discussed above). The audio output device 1208 may include any device that generates an audible indicator, such as speakers, headsets, or earbuds, for example.

The computing device 1200 may include an audio input device 1218 (or corresponding interface circuitry, as discussed above). The audio input device 1218 may include any device that generates a signal representative of a sound, such as microphones, microphone arrays, or digital instruments (e.g., instruments having a musical instrument digital interface (MIDI) output).

The computing device 1200 may include a GPS device 1216 (or corresponding interface circuitry, as discussed above). The GPS device 1216 may be in communication with a satellite-based system and may receive a location of the computing device 1200, as known in the art.

The computing device 1200 may include a sensor 1230 (or one or more sensors). The computing device 1200 may include corresponding interface circuitry, as discussed above). Sensor 1230 may sense physical phenomenon and translate the physical phenomenon into electrical signals that can be processed by, e.g., processing device 1202. Examples of sensor 1230 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1200 may include another output device 1210 (or corresponding interface circuitry, as discussed above). Examples of the other output device 1210 may include an audio codec, a video codec, a printer, a wired or wireless transmitter for providing information to other devices, haptic output device, gas output device, vibrational output device, lighting output device, home automation controller, or an additional storage device.

The computing device 1200 may include another input device 1220 (or corresponding interface circuitry, as discussed above). Examples of the other input device 1220 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1200 may have any desired form factor, such as a handheld or mobile computer system (e.g., a cell phone, a smart phone, a mobile Internet device, a music player, a tablet computer, a laptop computer, a netbook computer, a personal digital assistant (PDA), a personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1200 may be any other electronic device that processes data.

*Select examples*

Example 1 provides a method, including receiving a first pixel pair including a first pixel value of a first image captured using a first exposure time, and a second pixel value of a second image captured by a second exposure time different from the first exposure time; assigning a first weight to the first pixel pair; updating one or more accumulator values using the first weight, the first pixel value, and the second pixel value; determining a parameter for merging a third image and a fourth image based on the one or more accumulator values; and merging the third image and the fourth image using the parameter to generate a first merged video frame of a video.

Example 2 provides the method of example 1, further including receiving a second pixel pair including a third pixel value of the first image, and a fourth pixel value of the second image; assigning a second weight to the second pixel pair; and updating the one or more accumulator values using the second weight, the third pixel value, and the fourth pixel value.

Example 3 provides the method of example 1 or 2, where the parameter includes an exposure time ratio, the exposure time ratio being a ratio of the first exposure time and the second exposure time.

Example 4 provides the method of any one of examples 1-3, where the parameter includes an estimate of a slope of a line fitted to a plot of pixel values of the first image versus pixel values of the second image.

Example 5 provides the method of any one of examples 1-4, where assigning the first weight to the first pixel pair includes determining that the first pixel value or the second pixel value indicates saturation; and in response to determining that the first pixel value or the second pixel value indicates saturation, setting the first weight to zero.

Example 6 provides the method of any one of examples 1-5, where assigning the first weight to the first pixel pair includes determining the first weight based on a further parameter determined for merging a fifth image and a sixth image.

Example 7 provides the method of any one of examples 1-6, where assigning the first weight to the first pixel pair includes determining that the first pixel value or the second pixel value indicates a deviation from an expected value; and in response to determining that the first pixel value or the second pixel value indicates the deviation, setting the first weight to zero.

Example 8 provides the method of any one of examples 1-7, where assigning the first weight to the first pixel pair includes determining a difference of the first pixel value or the second pixel value from an expected value; and setting the first weight according to a magnitude of the difference.

Example 9 provides the method of any one of examples 1-8, where updating the one or more accumulator values includes updating a first accumulator value by adding the first accumulator value by a first product of the first weight and the first pixel value.

Example 10 provides the method of any one of examples 1-9, where updating the one or more accumulator values includes updating a second accumulator value by adding the second accumulator value by a second product of the first weight and the second pixel value.

Example 11 provides the method of any one of examples 1-10, where updating the one or more accumulator values includes updating a third accumulator value by adding the third accumulator value by a third product of the first weight and a square of the first pixel value.

Example 12 provides the method of any one of examples 1-11, where updating the one or more accumulator values includes updating a fourth accumulator value by adding the fourth accumulator value by a fourth product of the first weight, the first pixel value, and the second pixel value.

Example 13 provides the method of any one of examples 1-12, where updating the one or more accumulator values includes updating a fifth accumulator value by adding the fifth accumulator value by the first weight.

Example 14 provides one or more non-transitory computer-readable media storing instructions that, when executed by one or more processors, cause the one or more processors to: receive a first pixel pair including a first pixel value of a first image captured using a first exposure time, and a second pixel value of a second image captured by a second exposure time different from the first exposure time; assign a first weight to the first pixel pair; update one or more accumulator values using the first weight, the first pixel value, and the second pixel value; determine a parameter for merging a third image and a fourth image based on the one or more accumulator values; and merge the third image and the fourth image using the parameter to generate a first merged video frame of a video.

Example 15 provides the one or more non-transitory computer-readable media of example 14, where the instructions further cause the one or more processors to: receive a second pixel pair including a third pixel value of the first image, and a fourth pixel value of the second image; assign a second weight to the second pixel pair; and update the one or more accumulator values using the second weight, the third pixel value, and the fourth pixel value.

Example 16 provides the one or more non-transitory computer-readable media of example 14 or 15, where the parameter includes an exposure time ratio, the exposure time ratio being a ratio of the first exposure time and the second exposure time.

Example 17 provides the one or more non-transitory computer-readable media of any one of examples 14-16, where the parameter includes an estimate of a slope of a line fitted to a plot of pixel values of the first image versus pixel values of the second image.

Example 18 provides the one or more non-transitory computer-readable media of any one of examples 14-17, where assigning the first weight to the first pixel pair includes determining that the first pixel value or the second pixel value indicates saturation; and in response to determining that the first pixel value or the second pixel value indicates saturation, setting the first weight to zero.

Example 19 provides the one or more non-transitory computer-readable media of any one of examples 14-18, where assigning the first weight to the first pixel pair includes determining the first weight based on a further parameter determined for merging a fifth image and a sixth image.

Example 20 provides the one or more non-transitory computer-readable media of any one of examples 14-19, where assigning the first weight to the first pixel pair includes determining that the first pixel value or the second pixel value indicates a deviation from an expected value; and in response to determining that the first pixel value or the second pixel value indicates the deviation, setting the first weight to zero.

Example 21 provides the one or more non-transitory computer-readable media of any one of examples 14-20, where assigning the first weight to the first pixel pair includes determining a difference of the first pixel value or the second pixel value from an expected value; and setting the first weight according to a magnitude of the difference.

Example 22 provides the one or more non-transitory computer-readable media of any one of examples 14-21, where updating the one or more accumulator values includes updating a first accumulator value by adding the first accumulator value by a first product of the first weight and the first pixel value.

Example 23 provides the one or more non-transitory computer-readable media of any one of examples 14-22, where updating the one or more accumulator values includes updating a second accumulator value by adding the second accumulator value by a second product of the first weight and the second pixel value.

Example 24 provides the one or more non-transitory computer-readable media of any one of examples 14-23, where updating the one or more accumulator values includes updating a third accumulator value by adding the third accumulator value by a third product of the first weight and a square of the first pixel value.

Example 25 provides the one or more non-transitory computer-readable media of any one of examples 14-24, where updating the one or more accumulator values includes updating a fourth accumulator value by adding the fourth accumulator value by a fourth product of the first weight, the first pixel value, and the second pixel value.

Example 26 provides the one or more non-transitory computer-readable media of any one of examples 14-25, where updating the one or more accumulator values includes updating a fifth accumulator value by adding the fifth accumulator value by the first weight.

Example 27 provides an apparatus, comprising one or more processors; and one or more non-transitory computer-readable media storing instructions that, when executed by one or more processors, cause the one or more processors to: receive a first pixel pair including a first pixel value of a first image captured using a first exposure time, and a second pixel value of a second image captured by a second exposure time different from the first exposure time; assign a first weight to the first pixel pair; update one or more accumulator values using the first weight, the first pixel value, and the second pixel value; determine a parameter for merging a third image and a fourth image based on the one or more accumulator values; and merge the third image and the fourth image using the parameter to generate a first merged video frame of a video.

Example 28 provides the apparatus of example 27, where the instructions further cause the one or more processors to: receive a second pixel pair including a third pixel value of the first image, and a fourth pixel value of the second image; assign a second weight to the second pixel pair; and update the one or more accumulator values using the second weight, the third pixel value, and the fourth pixel value.

Example 29 provides the apparatus of example 27 or 28, where the parameter includes an exposure time ratio, the exposure time ratio being a ratio of the first exposure time and the second exposure time.

Example 30 provides the apparatus of any one of examples 27-29, where the parameter includes an estimate of a slope of a line fitted to a plot of pixel values of the first image versus pixel values of the second image.

Example 31 provides the apparatus of any one of examples 27-30, where assigning the first weight to the first pixel pair includes determining that the first pixel value or the second pixel value indicates saturation; and in response to determining that the first pixel value or the second pixel value indicates saturation, setting the first weight to zero.

Example 32 provides the apparatus of any one of examples 27-31, where assigning the first weight to the first pixel pair includes determining the first weight based on a further parameter determined for merging a fifth image and a sixth image.

Example 33 provides the apparatus of any one of examples 27-32, where assigning the first weight to the first pixel pair includes determining that the first pixel value or the second pixel value indicates a deviation from an expected value; and in response to determining that the first pixel value or the second pixel value indicates the deviation, setting the first weight to zero.

Example 34 provides the apparatus of any one of examples 27-33, where assigning the first weight to the first pixel pair includes determining a difference of the first pixel value or the second pixel value from an expected value; and setting the first weight according to a magnitude of the difference.

Example 35 provides the apparatus of any one of examples 27-34, where updating the one or more accumulator values includes updating a first accumulator value by adding the first accumulator value by a first product of the first weight and the first pixel value.

Example 36 provides the apparatus of any one of examples 27-35, where updating the one or more accumulator values includes updating a second accumulator value by adding the second accumulator value by a second product of the first weight and the second pixel value.

Example 37 provides the apparatus of any one of examples 27-36, where updating the one or more accumulator values includes updating a third accumulator value by adding the third accumulator value by a third product of the first weight and a square of the first pixel value.

Example 38 provides the apparatus of any one of examples 27-37, where updating the one or more accumulator values includes updating a fourth accumulator value by adding the fourth accumulator value by a fourth product of the first weight, the first pixel value, and the second pixel value.

Example 39 provides the apparatus of any one of examples 27-38, where updating the one or more accumulator values includes updating a fifth accumulator value by adding the fifth accumulator value by the first weight.

Example A provides one or more non-transitory computer-readable media storing instructions that, when executed by one or more processors, cause the one or more processors to perform any one of the methods provided in examples 1-13 and the methods described herein.

Example B provides an apparatus comprising means to carry out or means for carrying out any one of the methods provided in examples 1-13 and the methods described herein.

Example C provides a stitching part (e.g., stitching 650) as described and illustrated herein.

Example D provides a system (e.g., system 600) as described and illustrated herein.

Example E provides a system comprising an auto-exposure controller, an image sensor, and a stitching part (e.g., stitching 650) as described and illustrated herein.

*Variations and other notes*

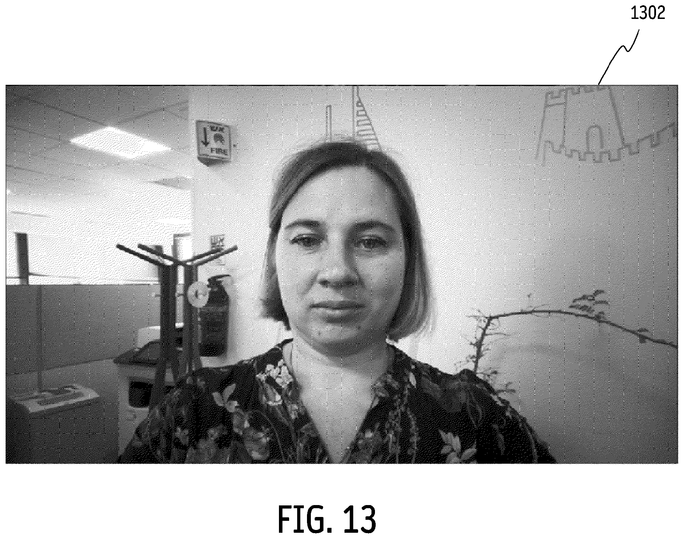

FIG. 13 illustrates a merged video frame 1302 with fewer or without artifacts, according to some embodiments of the disclosure. The merged video frame 1302 may be generated using the operations illustrated in FIGS. 6-8. FIG. 13 can be juxtaposed against the merged video frame 302 in FIG. 3. Merged video frame 1302 has a significant quality improvement over merged video frame 302.

While an example of DOL is illustrated herein, it is envisioned by the disclosure that the ETR estimation technique may be applied to other muti-exposure merging techniques.

While an example of merging two images with different exposure times is described as an illustration, it is envisioned by the disclosure that the teachings can be extended to merge more than two images with different exposure times. The operations may be implemented to determine the ETRs between all pairs of images at once. For K images with K different exposure times, there are $n \cdot (n-1)/2$ distinct pairs of images. For example, if K=4, there are 6 pairs of images: $1\leftrightarrow2$, $1\leftrightarrow3$, $1\leftrightarrow4$, $2\leftrightarrow3$, $2\leftrightarrow4$, and $3\leftrightarrow4$. Because the operations are based on linear regression estimation, the system can become more over-determined, and the estimation error can be reduced. In some embodiments, the number of accumulators used can increase linearly with the number of images with different exposure times.

Although the operations of the example method shown in and described with reference to FIGS. 7-8, and 10 are illustrated as occurring once each and in a particular order, it will be recognized that the operations may be performed in any suitable order and repeated as desired. Additionally, one or more operations may be performed in parallel. Furthermore, the operations illustrated in FIGS. 7-8, and 10 may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter.

However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method, comprising:

   receiving a first pixel pair comprising a first pixel value of a first image captured using a first exposure time, and a second pixel value of a second image captured by a second exposure time different from the first exposure time;
   assigning a first weight to the first pixel pair;
   updating one or more accumulator values using the first weight, the first pixel value, and the second pixel value;
   determining a parameter for merging a third image and a fourth image based on the one or more accumulator values; and
   merging the third image and the fourth image using the parameter to generate a first merged video frame of a video.

2. The method of claim 1, further comprising:

   receiving a second pixel pair comprising a third pixel value of the first image, and a fourth pixel value of the second image;
   assigning a second weight to the second pixel pair; and
   updating the one or more accumulator values using the second weight, the third pixel value, and the fourth pixel value.

3. The method of claim 1 or 2, wherein the parameter comprises an exposure time ratio, the exposure time ratio being a ratio of the first exposure time and the second exposure time.

4. The method of any one of claims 1-3, wherein the parameter comprises an estimate of a slope of a line fitted to a plot of pixel values of the first image versus pixel values of the second image.

5. The method of any one of claims 1-4, wherein assigning the first weight to the first pixel pair comprises:

determining that the first pixel value or the second pixel value indicates saturation; and
in response to determining that the first pixel value or the second pixel value indicates saturation, setting the first weight to zero.

6. The method of any one of claims 1-5, wherein assigning the first weight to the first pixel pair comprises: determining the first weight based on a further parameter determined for merging a fifth image and a sixth image.

7. The method of any one of claims 1-6, wherein assigning the first weight to the first pixel pair comprises:

   determining that the first pixel value or the second pixel value indicates a deviation from an expected value; and
   in response to determining that the first pixel value or the second pixel value indicates the deviation, setting the first weight to zero.

8. The method of any one of claims 1-7, wherein assigning the first weight to the first pixel pair comprises:

   determining a difference of the first pixel value or the second pixel value from an expected value; and
   setting the first weight according to a magnitude of the difference.

9. The method of any one of claims 1-8, wherein updating the one or more accumulator values comprises: updating a first accumulator value by adding the first accumulator value by a first product of the first weight and the first pixel value.

10. The method of any one of claims 1-9, wherein updating the one or more accumulator values comprises: updating a second accumulator value by adding the second accumulator value by a second product of the first weight and the second pixel value.

11. The method of any one of claims 1-10, wherein updating the one or more accumulator values comprises: updating a third accumulator value by adding the third accumulator value by a third product of the first weight and a square of the first pixel value.

12. The method of any one of claims 1-11, wherein updating the one or more accumulator values comprises: updating a fourth accumulator value by adding the fourth accumulator value by a fourth product of the first weight, the first pixel value, and the second pixel value.

13. The method of any one of claims 1-12, wherein updating the one or more accumulator values comprises: updating a fifth accumulator value by adding the fifth accumulator value by the first weight.

14. One or more non-transitory computer-readable media storing instructions that, when executed by one or more processors, cause the one or more processors to perform a method as claimed in any one of the preceding claims.

15. An apparatus comprising means to perform a method as claimed in any one of claims 1-13.

100

LIGHT
SENSOR 102 → 160 → AUTO-EXPOSURE
CONTROLLER 104 → 190

↓ 162

IMAGE
SENSOR 106

E.G., 1/30 SECONDS | CAPTURED IMAGES 108

110  112  120  122  130  132  140  142

STITCHING 150

110  112  120  122  130  132  140  142

MERGE 114  190  MERGE 124  190  MERGE 134  190  MERGE 144  190

HDR VIDEO
FRAME 116  |  HDR VIDEO
FRAME 126  |  HDR VIDEO
FRAME 136  |  HDR VIDEO
FRAME 146

HDR VIDEO 180

FIG. 1

INSTRUCTION TO ALTER EXPOSURE TIME     IMAGE SENSOR APPLIES INSTRUCTION

CAPTURED IMAGES 108

E.G.,
1/30
SECONDS

P=1    P=2    P=3    P=4    P=5    P=6    P=7    P=8

TIME LAG 280

# FIG. 2

FIG. 3

CAPTURED WITH LONG EXPOSURE TIME                                    402

CAPTURED WITH SHORT EXPOSURE TIME                                   404

# FIG. 4

FIG. 5

600

| LIGHT SENSOR 102 | → | AUTO-EXPOSURE CONTROLLER 104 |

190

IMAGE SENSOR 106

**CAPTURED IMAGES 108**

E.G., 1/30 SECONDS

110  112  120  122  130  132  140  142

**STITCHING 650**

110  112  120  122  130  132  140  142

| DETERMINE ETR 610 | DETERMINE ETR 620 | DETERMINE ETR 630 | DETERMINE ETR 640 |

| MERGE 614 | MERGE 624 | MERGE 634 | MERGE 644 |

190  190  190  190

| HDR VIDEO FRAME 616 | HDR VIDEO FRAME 626 | HDR VIDEO FRAME 636 | HDR VIDEO FRAME 646 |

HDR VIDEO 680

# FIG. 6

120

122

DETERMINE ETR 620

FOR A PIXEL PAIR:

ASSIGN WEIGHT 704

UPDATE ACCUMULATORS 706

DETERMINE
ETR 610

ACCUMULATORS
702

CALCULATE ETR 708

130     132

MERGE 634

HDR VIDEO
FRAME 636

FIG. 7

ASSIGN WEIGHT 704

PIXEL SATURATED? 802

YES

NO

OUTLIER? 804

YES

820

WEIGHT=0

810

NO

0<WEIGHT≤1

# FIG. 8

FIG. 9

FIG. 10

<u>1100</u>

```
┌─────────────────────────────────────────────────────┐
│       RECEIVE A FIRST PIXEL PAIR 1102                │
└─────────────────────────────────────────────────────┘
                          │
                          ▼
┌─────────────────────────────────────────────────────┐
│   ASSIGN A FIRST WEIGHT TO THE FIRST PIXEL PAIR 1104 │
└─────────────────────────────────────────────────────┘
                          │
                          ▼
┌─────────────────────────────────────────────────────┐
│       UPDATE ACCUMULATOR VALUE(S) 1106               │
└─────────────────────────────────────────────────────┘
                          │
                          ▼
┌─────────────────────────────────────────────────────┐
│  DETERMINE PARAMETER FOR MERGING IMAGES BASED ON     │
│         ACCUMULATOR VALUE(S) 1108                    │
└─────────────────────────────────────────────────────┘
                          │
                          ▼
┌─────────────────────────────────────────────────────┐
│  MERGE IMAGES USING THE PARAMETER TO GENERATE A FIRST│
│       MERGED VIDEO FRAME OF A VIDEO 1110             │
└─────────────────────────────────────────────────────┘
```

# FIG. 11

COMPUTING DEVICE 1200

MEMORY 1204

CAPTURED IMAGES 108

STITCHING 650

1100

HDR VIDEO 180

PROCESSING DEVICE
1202

ANTENNA 1222

COMMUNICATION DEVICE
1212

DISPLAY DEVICE
1206

GPS DEVICE
1216

POWER
SOURCE /
POWER
CIRCUITRY
1214

AUDIO OUTPUT DEVICE
1208

AUDIO INPUT DEVICE
1218

OTHER OUTPUT DEVICE
1210

OTHER INPUT DEVICE
1220

SENSOR
1230

FIG. 12

1302

FIG. 13

Europäisches
Patentamt

European
Patent Office

Office européen
des brevets

# EUROPEAN SEARCH REPORT

**Application Number**

EP 25 15 9103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHIM SEONG-O: "Estimation of gamma-corrected exposure time ratio in multi-exposure images for removal of moving objects", APPLIED OPTICS, vol. 59, no. 13, May 2020 (2020-05), pages 4076-4080, XP093297458, US ISSN: 1559-128X, DOI: 10.1364/AO.391150 * abstract, sections 1-4, Figs. 1-7 * | 1-15 | INV. G06T5/50 G06T5/94 |
| A | US 11 089 231 B2 (FUJIFILM CORP [JP]) 10 August 2021 (2021-08-10) * abstract, cols. 1-14, claims 1-17, Figs. 1-10 * | 1-15 | |

**TECHNICAL FIELDS SEARCHED (IPC)**

G06T
H04N

The present search report has been drawn up for all claims

| Place of search | Date of completion of the search | Examiner |
|---|---|---|
| Munich | 28 July 2025 | Borotschnig, Hermann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 9103

This annex lists the patent family members relating to the patent documents cited in  the above-mentioned European search report.
The members are as contained in the European Patent Office EDP file on
The European Patent Office is in no way liable for these particulars which are merely given for the purpose of information.

28-07-2025

| Patent document cited in search report | | Publication date | Patent family member(s) | Publication date |
|---|---|---|---|---|
| US 11089231 | B2 | 10-08-2021 | JP        6779408 B2 | 04-11-2020 |
| | | | JP WO2019171782 A1 | 14-01-2021 |
| | | | US    2020351428 A1 | 05-11-2020 |
| | | | WO    2019171782 A1 | 12-09-2019 |

EPO FORM P0459

For more details about this annex : see Official Journal of the European Patent Office, No. 12/82